# EUROPÄISCHE PATENTSCHRIFT

(11) **EP 0 424 773 B1**
(45) Veröffentlichungstag und Bekanntmachung des Hinweises auf die Patenterteilung: **26.01.1994**
(21) Anmeldenummer: 90119707.9
(22) Anmeldetag: 15.10.1990
(51) Int. Cl.: G01G 23/01

(54) **Elektronische Waage mit Kalibriervorrichtung**
Electronic balance with calibrating means
Balance électronique avec dispositif de calibrage

(30) Priorität: 21.10.1989 DE 3935118
(43) Veröffentlichungstag der Anmeldung: 02.05.1991
(73) Patentinhaber: SARTORIUS AG, 37075 Göttingen (DE)
(72) Erfinder: Berthel, Dieter, W-3400 Göttingen (DE); Melcher, Franz-Josef, W-3414 Hardegsen 3 (DE)
(74) Vertreter: Köhler, Rudolf

(56) Entgegenhaltungen:
- EP-B- 0 093 183
- CH-A- 670 508
- DE-A- 3 602 345
- DE-A- 3 639 521

## Beschreibung

Die Erfindung bezieht sich auf eine elektronische Waage mit einem Meßwertaufnehmer, mit einer digitalen Signalverarbeitungseinheit, mit einer Anzeigeeinheit und mit einer von der digitalen Signalverarbeitungseinheit gesteuerten Kalibriervorrichtung zum motorischen Auflegen und Abheben eines Kalibriergewichtes.

Waagen dieser Art sind z.B. aus der EP 0 93 183 (B1) bekannt. Dort ist zur Sicherstellung einer richtigen Kalibrierung vorgeschlagen, das Ergebnis eines Kalibrierzyklusses einer Plausibilitätsprüfung zu unterziehen und nur bei positivem Ergebnis dieser Prüfung die Waage freizugeben. Als Beispiel einer Plausibilitätsprüfung ist dort angegeben, den Kalibrierzyklus wiederholt durchzuführen und die Ergebnisse auf Gleichheit zu überprüfen. Über die Anzahl der Wiederholungen werden keine Angaben gemacht.
- Die exakte Gleichheit zweier Kalibrierzyklen läßt sich jedoch nur bei Waagen geringer und mittlerer Auflösung sicherstellen. Weiter ist es nachteilig, wenn bei einem negativen Ausgang der Plausibilitätsprüfung die Waage nicht mehr freigegeben wird, also keine Wägungen mehr möglich sind.

Weiterhin ist es allgemein bekannt, aus mehreren Wägeergebnissen den Mittelwert und die Standardabweichung zu berechnen (z.B. DE-OS 23 20 612).

Aufgabe der Erfindung ist es also, eine elektronische Waage der eingangs genannten Art anzugeben, bei der auch bei hoher Auflösung eine sichere und genaue Kalibrierung möglich ist, bei der der Zeitbedarf für die Kalibrierung auf das Notwendigste reduziert ist und trotzdem Falschkalibrierungen weitgehend ausgeschlossen sind und die sich flexibel an verschiedene Kundenwünsche und Umgebungsbedingungen anpassen läßt.

Erfindungsgemäß wird dies dadurch erreicht, daß die digitale Signalverarbeitungseinheit das Kalibriergewicht fortlaufend auflegen und wieder abheden läßt und aus den einzelnen gemessenen Werten den Mittelwert und die Standardabweichung errechnet, die errechnete Standardabweichung laufend mit einem vorgegebenen, innerhalb der digitalen Signalverarbeitungseinheit abgespeicherten Wert vergleicht und das Auflegen und Abheden des Kalibriergewichtes stoppt und aus dem errechneten Mittelwert den Kalibrierfaktor errechnet und abspeichert, sobald die errechnete Standardabweichung kleiner ist als der vorgegebene Wert und daß die digitale Signalverarbeitungseinheit nach einer vorgegeben Maximalzeit das Auflegen und Abheben des Kalibriergewichtes auch dann stoppt, wenn die errechnete Standardabweichung nicht kleiner ist als der vorgegebene Wert, und in diesem Fall keinen neuen Kalibrierfaktor abspeichert.

Durch die mehrmalige Wiederholung des Auflegens und Abhebens des Kalibriergewichtes und durch die Errechnung der Standardabweichung ist quantitativ bekannt, wie genau unter den gerade herrschenden Umgebungsbedingungen die Neukalibrierung ausfallen wird. Aufgrund dieser Information kann die digitale Signalverarbeitungseinheit selbsttägig anhand der vorgegebenen Mindestanforderung entscheiden, ob auf der Grundlage dieser Kalibrierungsmessung ein neuer Kalibrierfaktor abgespeichert werden soll oder ob der alte Kalibrierfaktor weiterhin benutzt werden soll. Zusätzlich bietet die erfindungsgemäße fortlaufende Wiederholung des Auflegens und Abhebens des Kalibriergewichtes den Vorteil, daß die Standardabweichung des Mittelwertes bei größer werdender Anzahl der Meßwerte kleiner wird, so daß die Kalibrierung mit einer höheren Genauigkeit durchgeführt werden kann als die Einzelmessung. Dies ist besonders bei Waagen hoher Auflösung (100.000 Schritte und mehr) wichtig. Auf der anderen Seite wird eine unnötig hohe Zahl von Wiederholungen des Auflegens und Abhebens des Kalibriergewichtes vermieden und sofort nach Erreichen der vorgegebenen Mindestanforderung die Kalibrierung beendet. Demgegenüber müßte bei fester Vorgabe der Zahl der Wiederholungen von den ungünstigsten Umgebungsbedingungen ausgegangen werden und daher die Zahl der Wiederholungen entsprechend hoch vorgegeben werden. Für die Kalibrierung wird dadurch nur ein Minimum an Zeit benötigt. Bei der Vorgabe der Mindestanforderung - was beispielsweise im Rahmen eines Menüs erfolgt - kann der Bediener sich zusätzlich entscheiden, ob er mehr Wert legt auf eine hohe Genauigkeit oder auf einen geringen Zeitbedarf zum Kalibrieren und dementsprechend die Mindestanforderung vorgeben.

Vorteilhafte Ausführungsformen ergeben sich aus den abhängigen Patentansprüchen.

Die Erfindung wird im folgenden anhand der schematischen Figuren beschrieben. Dabei zeigt:
- Fig. 1: einen Schnitt durch das Wägesystem und ein Blockschaltbild der Elektronik in einer ersten Ausgestaltung,
- Fig. 2: das Äußere der Waage in perspektivischer Darstellung,
- Fig. 3: die Anzeigeeinheit einer zweiten Ausgestaltung und
- Fig. 4: die Anzeigeeinheit einer dritten Ausgestaltung.

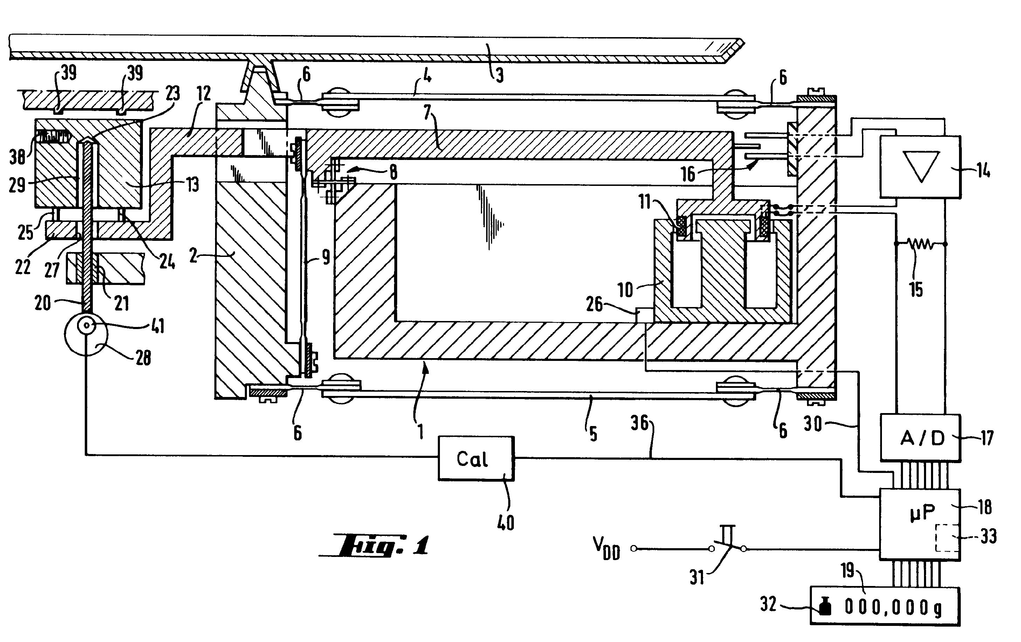

In Fig. 1 ist ein Schnitt durch das Wägesystem und ein Blockschaltbild der zugehörigen Elektronik gezeigt. Das Gehäuse der Waage und die Spannungsversorgung der Elektronik sind als nicht erfindungswesentlich der Übersichtlichkeit halber weggelassen. Das Wägesystem besteht aus einem gehäusefesten Systemträger 1, an dem über zwei Lenker 4 und 5 mit den Gelenkstellen 6 ein Lastaufnehmer 2 in senkrechter Richtung beweglich befestigt ist. Der Lastaufnehmer 2 trägt in seinem oberen Teil die Lastschale 3 zur Aufnahme des Wägegutes und überträgt die der Masse des Wägegutes entsprechende Kraft über ein Koppelelement 9 auf den Lastarm des Übersetzungshebels 7. Der Übersetzungshebel 7 ist durch ein Kreuzfedergelenk 8 am Systemträger 1 gelagert. Am Kompensationsarm des Übersetzungshebels 7 ist ein Spulenkörper mit einer Spule 11 befestigt. Die Spule 11 befindet sich im Luftspalt eines Permanentmagnetsystems 10 und erzeugt die Kompensationskraft. Die Größe des Kompensationsstromes durch die Spule 11 wird dabei in bekannter Weise durch den Lagensensor 16 und den Regelverstärker 14 so geregelt, daß Gleichgewicht zwischen dem Gewicht des Wägegutes und der elektromagnetisch erzeugten Kompensationskraft herrscht. Der Kompensationsstrom erzeugt am Meßwiderstand 15 eine Meßspannung, die einem Analog/Digital-Wandler 17 zugeführt wird. Das digitalisierte Ergebnis wird von einer digitalen Signalverarbeitungseinheit 18 übernommen und in der Anzeige 19 digital angezeigt. Weiter ist ein Temperatursensor 26 vorhanden, der die Temperatur des Meßwertaufnehmers in ein digitales Signal umformt und über die Leitung 30 der digitalen Signalverarbeitungseinheit 18 zuführt. Die digitale Signalverarbeitungseinheit 18 kann dadurch Temperaturfehler des Meßwertaufnehmers korrigieren.

Der Lastarm des Übersetzungshebels 7 ist über den Bufestigungspunkt des Koppelelementes 9 hinaus verlängert (12) und läuft in einem nach unten abgekröpften Teil 22 aus. Am Teil 22 sind drei senkrecht stehende Zentrierstifte befestigt, von denen in Fig. 1 nur die beiden Zentrierstifte 24 und 25 zu erkennen sind. Diese Zentrierstifte tragen das Kalibriergewicht 13. Das Kalibriergewicht 13 weist eine von unten kommende Bohrung 29 auf, die in einer kegeligen Fläche 23 ausläuft. Diese Bohrung geht genau durch den Schwerpunkt des Kalibriergewichtes, so daß die kegelige Fläche senkrecht über dem Schwerpunkt des Kalibriergewichtes liegt.

Weiter ist in Fig. 1 eine Hubvorrichtung für das Kalibriergewicht angedeutet, die aus einem Stachel 20 besteht, der in einer gehäusefesten Hülse 21 in senkrechter Richtung beweglich geführt wird. Die Vorrichtung zum Bewegen des Stachels ist nur durch einen Exzenter 28 und einen Elektromotor 41 angedeutet. Der Stachel 20 reicht durch ein Loch 27 im Teil 22 bis in die Bohrung 29 im Kalibriergewicht 13. In der gezeichneten Stellung, in der das Kalibriergewicht auf den Zentrierstiften und damit auf dem Übersetzungshebel 7/12/22 aufliegt, endet der Stachel 20 mit seiner kegelförmigen Spitze dicht unterhalb der kegeligen Fläche 23. Wird nun der Stachel 20 durch den Exzenter 28 angehoben, so kommt er mit der kegeligen Fläche 23 in Kontakt, hebt das Kalibriergewicht 13 vom Übersetzungshebel ab und drückt es gegen gehäusefeste Anschläge 39. Dies ist die Normalstellung des Kalibriergewichtes (Wägestellung), während die in Fig. 1 gezeichnete abgesenkte Stellung nur für den Kalibriervorgang eingenommen wird. Der Schwerpunkt des Kalibriergewichtes 13 läßt sich durch die Schraube 38 geringfügig verschieben, wodurch ein Feinabgleich erzeugt werden kann.

Die Ansteuerung des Elektromotors 41 erfolgt durch die Ablaufsteuerung 40, die wiederum mit der digitalen Signalverarbeitungseinheit 18 über die Leitung 36 in Verbindung steht. Die Ablaufsteuerung 40 startet den Elektromotor 41, wartet nach dem Aufsetzen des Kalibriergewichtes 13 auf den Übersetzungshebel 7/12/22 ab, bis die digitale Signalverarbeitungseinheit 18 die Beruhigung des Meßwertes meldet und läßt dann den Elektromotor 41 das Kalibriergewicht 13 wieder in die Wägestellung anheben. Diesen Zyklus wiederholt die Ablaufsteuerung 40 so lange, wie sie von der digitalen Signalverarbeitungseinheit 18 den Befehl dazu erhält.

Die digitale Signalverarbeitungseinheit 18 errechnet nun die Differenz der Meßwerte bei aufgelegtem und bei abgehobenem Kalibriergewicht 13 und berechnet aus den aufeinanderfolgenden Zyklen den Mittelwert und die Standardabweichung. Diese berechnete Standardabweichung wird nun mit einem im Speicherbereich 33 der digitalen Signalverarbeitungseinheit 18 abgespeicherten Wert verglichen. Solange die berechnete Standardabweichung größer ist als der abgespeicherte Wert, erhält die Ablaufsteuerung 40 den Befehl, das Kalibriergewicht 13 weiterhin aufzulegen und abzuheben. Erst wenn die berechnete Standardabweichung kleiner oder gleich dem abgespeicherten Wert ist, erhält die Ablaufsteuerung den Stopp-Befehl und aus dem Mittelwert aller Messungen wird der neue Kalibrierfaktor errechnet und abgespeichert. - Sollte die errechnete Standardabweichung auch nach einer vorgegebenen Maximalzeit bzw. nach einer vorgegebenen Maximalzahl der Auflege-/Abhebezyklen immer noch oberhalb des im Speicherbereich 33 vorgegebenen Wertes liegen, so gibt die digitale Signalverarbeitungseinheit trotzdem den Stopp-Befehl für die Ablaufsteuerung 40, speichert in diesem Fall jedoch keinen neuen Kalibrierfaktor, sondern benutzt weiterhin den alten Kalibrierfaktor; die Kalibriermessung wird also in diesem Fall verworfen.

Durch diese Maßnahmen wird einerseits erreicht, daß die Zahl der Wiederholungen des Auflege-/Abhebe-Zyklusses so gering wie möglich bleibt, um die vorgegebene Kalibriergenauigkeit einzuhalten. Anderseits wird verhindert, daß versehentlich ein nur ungenau ermittelter Kalibrierfaktor abgespeichert wird, wenn zum Beispiel während des Kalibriervorganges die Waage durch Erschütterungen, Luftzug oder dergleichen gestört wird. Außerdem ist durch die mehrmalige Wiederholung des Auflege-/Abhebe-Zyklusses eine größere Genauigkeit beim Kalibrieren möglich, da die Unsicherheit - ausgedrückt durch die Standardabweichung - bei einem Mittelwert aus mehreren Messungen geringer ist als bei einer Einzelmessung.

Der Start des Kalibriervorganges kann zum Beispiel durch Betätigen der Taste 31 erfolgen. Während des Kalibriervorganges kann das Symbol 32 in der Anzeige 19 aufleuchten und bei erfolgreichem Abschluß wieder verschwinden. Sollte die Kalibrierung ohne das Einspeichern eines neuen Kalibrierfaktors enden, so könnte zum Beispiel anschließend das Symbol 32 einige Zeit blinken. - Der Kalibriervorgang kann aber auch automatisch von der digitalen Signalverarbeitungseinheit 18 gestartet werden, beispielsweise wenn sich die Temperatur seit der letzten Kalibrierung um mehr als einen vorgegebenen Wert geändert hat. Sollte die dann eigentlich notwendige Kalibrierung wegen einer zu großen Standardabweichung ohne das Einspeichern eines neuen Kalibrierfaktors enden, so könnte in diesem Fall durch dauerndes Blinken des Symbols 32 der Bediener auf die notwendige Kalibrierung hingewiesen werden. Die Waage bleibt jedoch in jedem Fall funktionsfähig, da auch bei negativem Abschluß des Kalibriervorganges die Waage nicht gesperrt wird, sondern der bisherige Kalibrierfaktor weiter benutzt wird.

Selbstverständlich kann auch der errechnete Mittelwert der Auflege-/Abhebe-Zyklen bei der Entscheidung, ob ein neuer Kalibrierfaktor abgespeichert werden soll oder nicht, berücksichtigt werden: Ist die Differenz zwischen dem bisherigen Kalibrierfaktor und dem neu errechneten Kalibrierfaktor kleiner als die Standardabweichung, so kann der bisherige Kalibrierfaktor weiterhin benutzt werden und die Abspeicherung eines neuen Kalibrierfaktors unterbleibt. Umgekehrt kann ein neuer Kalibrierfaktor auch dann abgespeichert werden, wenn die errechnete Standardabweichung größer als der vorgegebene Wert ist, falls nämlich die Differenz zwischen dem neu berechneten und dem bisherigen Kalibrierfaktor zum Beispiel größer als der dreifache Wert der Standardabweichung ist.

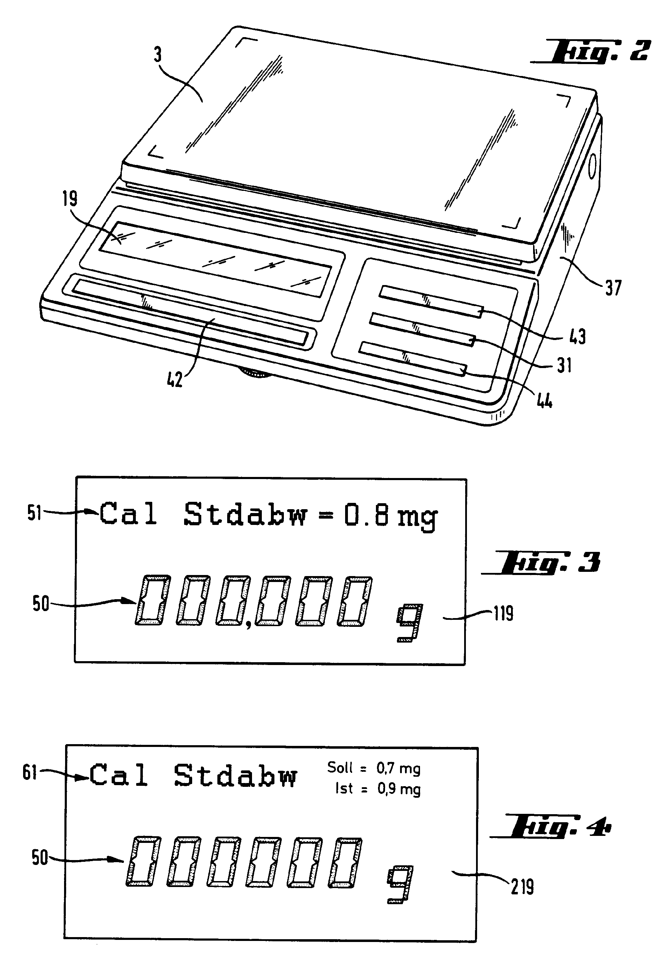

In Fig. 2 ist das Äußere der Waage perspektivisch dargestellt. Das Gehäuse 37 umschließt das in Fig. 1 dargestellte Wägesystem, den oberen Abschluß des Gehäuses bildet die Waagschale 3. Die Anzeigeeinheit 19 ist vor der Waagschale 3 angeordnet. Vor und neben der Anzeigeeinheit 19 befinden sich die Bedienungstaste 31 zum Starten des Kalibriervorganges und weitere Bedienungstasten 42,43 und 44 für weitere übliche Bedienungsfunktionen wie zum Beispiel das Tarieren.

In Fig. 3 ist die Anzeigeeinheit 119 einer zweiten Ausgestaltung der Waage gezeigt. Der mechanische und elektronische Teil der Waage ist im übrigen identisch mit der in Fig. 1 gezeigten ersten Ausgestaltung. Oberhalb der Anzeige 50 für das Wägeergebnis ist in Fig. 3 ein Anzeigefeld 51 vorgesehen, in dem über alphanumerische Zeichen dem Bediener verschiedene Informationen übermittelt werden können. Beim Kalibriervorgang wird zuerst die Abkürzung "Cal" angezeigt und dann, sobald das Kalibriergewicht zweimal aufgelegt und wieder abgehoben wurde, die errechnete Standardabweichung. Der Bediener kann dann entscheiden, ob die Standardabweichung seine Genauigkeitsansprüche schon erfüllt - er drückt dann die dafür vorgesehene Bedienungstaste (z.B. die Taste 43 in Fig. 2) und beendet dadurch den Kalibriervorgang vorzeitig und läßt den errechneten Kalibrierfaktor abspeichern - oder ob er das Auflegen und Abheben des Kalibriergewichtes weiterlaufen lassen will, um eine geringere Standardabweichung zu erzielen. Da der Bediener nach jedem Auflegen/abheben des Kalibriergewichtes einen neuen, aktualisierten Wert für die Standardabweiung angezeigt bekommt, kann er auch erkennen, wie sich die Standardabweichung jeweils ändert und ob sich der Aufwand für weiteres Warten noch lohnt. - Vorteilhafterweise weist die Waage zwei Bedienungstasten auf, die während des Kalibriervorganges aktiv sind: Beim Betätigen der einen Bedienungstaste wird der Kalibriervorgang mit dem Abspeichern eines neuen Kalibrierfaktors beendet, beim Betätigen der anderen Bedienungstaste wird der Kalibriervorgang ohne das Abspeichern eines neuen Kalibriervorganges beendet. Dies ermöglicht dem Bediener entweder das Beenden des Kalibriervorganges und das Abspeichern des Kalibrierfaktors, wenn ihm die erreichte Genauigkeit der Kalibrierung im Augenblick ausreicht. Oder er kann den Kalibriervorgang abbrechen, wenn er feststellt, daß aufgrund der augenblicklichen Umgebungsbedingungen (z.B, Erschütterungen) keine Kalibrierung mit der gewünschten Genauigkeit möglich ist; in diesem Fall bleibt der bisherige Kalibrierfaktor gespeichert und wird weiterhin benutzt. - In dieser Ausgestaltung kann der Bediener also den automatischen Ablauf des Kalibriervorganges je nach seinen augenblicklichen Zielen verändern. Er kann z.B. auch durch dauerndes Drücken der Starttaste 31 den Kalibriervorgang verlängern, um so für die gerade anliegenden Wägungen eine höhere Kalibrier-Genauigkeit als sonst üblich zu erreichen.

Die Bedienungstasten können zum Beispiel im rechten Teil der Anzeige 119 eine "Beschriftung" ihrer augenblicklichen Funktion erhalten. Diese Beschriftung wird dabei von der digitalen Signalverarbeitungseinheit gesteuert, so daß die Tasten beim Kalibrieren eine andere Funktion haben können als zum Beispiel beim Wiegen. Daneben ist es aus der DE-OS 36 38 210 bekannt, Bedienungstasten in mehrere Teilbereiche aufzuteilen. Durch eine dieser bekannten Maßnahmen ist es ohne weiteres möglich, für den Kalibriervorgang mehrere Bedienungstasten einzusetzen, ohne die Gesamtzahl der Bedienungstasten der Waage zu erhöhen.

In Fig. 4 ist die Anzeigeeinheit 219 einer dritten Ausgestaltung der Waage gezeigt. Der mechanische und elektronische Teil der Waage entspricht wieder der ersten Ausgestaltung nach Fig. 1. Oberhalb der Anzeige 60 für das Wägeergebnis ist in Fig. 4 ein alphanumerisches Anzeigefeld 61 vorgesehen, in dem sowohl die Abkürzung "Cal" als auch zwei Werte für die Standardabweichung angezeigt werden können.

Der untere, mit "Ist" bezeichnete Wert ist die während des Kalibriervorganges laufend berechnete Standardabweichung, der obere, mit "Soll" bezeichnete Wert ist die Standardabweichung, die als Sollwert im Speicher innerhalb der digitalen Signalverarbeitungseinheit 18 abgespeichert ist. Der Bediener kann dadurch die momentane Standardabweichung mit dem gewünschten Wert vergleichen und damit die momentan erreichte Genauigkeit mit der Soll-Genauigkeit. Der Bediener kann dann zum Beispiel so lange warten, bis das Kalibriergewicht so häufig aufgelegt und wieder abgehoben wurde, daß die momentane Standardabweichung gleich der gewünschten Standardabweichung ist und die Automatik den Kalibriervorgang beendet. Er kann aber auch den Kalibriervorgang vorzeitig beenden, entweder mit Abspeicherung des neuen Kalibrierfaktors, falls die größere Standardabweiung im Augenblick reicht, oder ohne Abspeicherung eines neuen Kalibrierfaktors, falls er erkennt, daß unter den gegebenen Umgebungsbedingungen der "Ist"-Wert der Standardabweichung den Sollwert nicht mehr oder erst nach einer zu langen Zeit erreichen wird.

In weitergehenden Ausgestaltungen ist es selbstverständlich auch möglich, den errechneten Mittelwert der Masse des Kalibriergewichtes bzw. des Kalibrierfaktors oder die Abweichung des Mittelwertes vom bisher gespeicherten Kalibrierfaktor mit anzuzeigen.

## Patentansprüche

1. Elektronische Waage mit einem Meßwertaufnehmer (1...11), mit einer digitalen Signalverarbeitungseinheit (18), mit einer Anzeigeeinheit (19,119,219) und mit einer von der digitalen Signalverarbeitungseinheit (18) gesteuerten Kalibriervorrichtung (20,28,40,41) zum motorischen Auflegen und Abheden eines Kalibriergewichtes (13), dadurch gekennzeichnet, daß die digitale Signalverarbeitungseinheit (18) das Kalibriergewicht (13) fortlaufend auflegen und wieder abheben läßt und aus den einzelnen gemessenen Werten den Mittelwert und die Standardabweichung errechnet, die errechnete Standardabweichung laufend mit einem vorgegebenen, innerhalb der digitalen Signalverarbeitungseinheit (18) abgespeicherten Wert vergleicht und das Auflegen und Abheben des Kalibriergewichtes (13) stoppt und aus dem errechneten Mittelwert den Kalibrierfaktor errechnet und abspeichert, sobald die errechnete Standardabweichung kleiner ist als der vorgegebene Wert und daß die digitale Signalverarbeitungseinheit (18) nach einer vorgegebenen Maximalzeit das Auflegen und Abheben des Kalibriergewichtes (13) auch dann stoppt, wenn die errechnete Standardabweichung nicht kleiner ist als der vorgegebene Wert, und in diesem Fall keinen neuen Kalibrierfaktor abspeichert.

2. Elektronische Waage nach Anspruch 1, dadurch gekennzeichnet, daß der errechnete Wert der Standardabweichung in der Anzeigeeinheit (119,219) angezeigt wird und daß mindestens eine Betätigungstaste (31) an der Waage vorhanden ist, an der der Bediener der Waage das Auflegen und Abheben des Kalibriergewichtes stoppen kann.

3. Elektronische Waage nach Anspruch 2, dadurch gekennzeichnet, daß zwei Betätigungstasten (31,43) an der Waage vorhanden sind, an denen der Bediener das Auflegen und Abheben des Kalibriergewichtes (13) stoppen kann und die durchgeführte Kalibrierungsmessung für gültig oder für ungültig erklären kann.

4. Elektronische Waage nach Anspruch 2 oder 3, dadurch gekennzeichnet, daß in der Anzeigeeinheit (219) sowohl die gerade errechnete Standardabweichung als auch der in der digitalen Signalverarbeitungseinheit (18) abgespeicherte Sollwert angezeigt wird.

## Claims

1. Electronic weighing machine with a measurement value pick-up (1 to 11), with a digital signal-processing unit (18), with an indicating unit (19, 119, 219) and with a calibrating device (20, 28, 40, 41), which is controlled by the digital signal-processing unit (18), for the motorised laying-on and lifting-off of a calibrating weight (13), characterised thereby, that the digital signal-processing unit (18) allows the calibrating weight (13) be laid on and lifted off continuously and computes the mean value and the standard deviation from the individual measured values, compares the computed standard deviation continuously with a preset value stored within the digital signal-processing unit (18) and stops the laying-on and lifting-off of the calibrating weight (13) and computes the calibration factor from the computed mean value and stores the calibration factor as soon as the computed standard deviation is less than the preset value and that the digital signal-processing unit (18) after a predetermined maximum time also stops the laying-on and lifting-off of the calibrating weight (13) when the computed standard deviation is not less than the preset value and in this case stores no new calibration factor.

2. Electronic weighing machine according to claim 1, characterised thereby, that the computed value of the standard deviation is indicated in the indicating unit (119, 219) and that at least one actuating key (31), at which the operator of the weighing machine can stop the laying-on and lifting-off of the calibrating weight (13), is present at the weighing machine.

3. Electronic weighing machine according to claim 2, characterised thereby, that two actuating keys (31, 43), at which the operator can stop the laying-on and lifting-off of the calibrating weight (13) and declare the performed calibration measurement as valid or invalid, are present at the weighing machine.

4. Electronic weighing machine according to claim 2 or 3, characterised thereby, that the just computed standard deviation as well as also the target value stored in the digital signal-processing unit (18) are indicated in the indicating unit (219).

## Revendications

1. Balance électronique comportant un transducteur (1...11), une unité numérique de traitement de signaux (18), une unité d'affichage (19,119,219) et, pour poser et soulever au moyen d'un moteur un poids de calibrage (13), un dispositif de calibrage (20,28,40,41) commandé par l'unité numérique de traitement de signaux (18), caractérisée en ce que l'unité numérique de traitement de signaux (18) peut, en permanence poser et soulever à nouveau le poids de calibrage (13), calcule, à partir des valeurs mesurées prises isolément, la moyenne de l'écart type, compare en permanence 1' écart type calculé à une valeur prédéterminée mise en mémoire à l'intérieur de l'unité de traitement de signaux (18), arrête la pose et le soulèvement du poids de calibrage (13) calcule et met en mémoire le facteur de calibrage à partir de la moyenne calculée, dès que l'écart type calculé est plus petit que la valeur prédéterminée et en ce que l'unité de traitement de signaux (18) stoppe également, après un temps maximal prédéfini, la pose et le soulèvement du poids de calibrage (13), dès lors que l'écart type calculé n'est pas inférieur à la valeur prédéterminée et, dans ce cas, ne met pas en mémoire un nouveau facteur de calibrage.

2. Balance électronique selon la revendication 1, caractérisée en ce que la valeur de l'écart type calculée apparaît sur l'unité d'affichage (119,219) et en ce qu'une touche de commande (31) au moins existe sur la balance, grâr ce à laquelle l'utilisateur de la balance peut stopper la pose et le soulèvement du poids de calibrage.

3. Balance électronique selon la revendication 2, caractérisée en ce que deux touches de commande (31,43) existent sur la balance, grâce auxquelles l'utilisateur peut stopper la pose et le soulèvement du poids de calibrage (13) et peut tenir la mesure de calibrage exécutée pour valable ou non valable.

4. Balance électronique selon la revendication 2 ou 3, caractérisée en ce que,dans l'unité d'affichage (219) sont affichés tant l'écart type précisément calculé qu'également la valeur de consigne mise en mémoire dans l'unité de traitement de signaux (18).
